# EUROPEAN PATENT SPECIFICATION

(11) **EP 0 928 231 B1**
(45) Date of publication and mention of the grant of the patent: **02.05.2003**
(21) Application number: 98912521.6
(22) Date of filing: 27.03.1998
(51) Int. Cl.: B23B 35/00

(54) **METHOD AND DEVICE FOR DRILLING OF HOLES INTO THE MANTLE OF A CYLINDER OR EQUIVALENT OF A PAPER MACHINE**
VERFAHREN UND VORRICHTUNG ZUM BOHREN VON LÖCHERN IN DEN MANTEL EINES ZYLINDERS ODER ÄHNLICHEM EINER PAPIERMASCHINE
PROCEDE ET DISPOSITIF DE PERCAGE DE TROUS DANS LA CHEMISE D'UN CYLINDRE OU SIMILAIRE D'UNE MACHINE A PAPIER

(30) Priority: 03.04.1997 FI 971366
(43) Date of publication of application: 14.07.1999
(73) Proprietor: Metso Paper, Inc., 00130 Helsinki (FI)
(72) Inventor: PARVIAINEN, Seppo, FIN-70150 Kuopio (FI); REIVO, Jaakko, FIN-40320 Jyväskylä (FI); PELKONEN, Jouko, FIN-40900 Säynätsalo (FI); TOLVANEN, Raimo, FIN-40340 Jyväskylä (FI)
(74) Representative: Jyrämä, Hanna-Leena Maria
(86) International application number: PCT/FI98/00279
(87) International publication number: WO 98/046386

(56) References cited:
- EP-A- 0 448 947
- EP-A- 0 545 879
- WO-A-94/17944
- US-A- 4 674 925

## Description

The invention relates to a method for drilling holes in a mantle of a cylinder of a paper machine, in which method the holes are drilled in the cylinder mantle by means of a device provided with drill bits, which device is transferred after each drilling cycle to the next drilling position, in which method the device for drilling holes is supported by means of fastening supports of the device whereby in the method, before the drilling is started, the device is locked in place by means of an actuator by locking the fastening supports in a desired position, and that, by means of drill bits of the device, the holes are drilled in the cylinder situated underneath from the top downward.

The invention also relates to a device for drilling holes in a mantle of a cylinder of a paper machine, which device comprises a number of drill bits, a frame construction, and drive means for transferring and rotating the drill bits during drilling. which device comprises fastening supports by whose means the device can be supported in place in a drilling position whereby the device comprises an actuator for locking the device in place in the drilling position, and the device has drill bits for drilling holes in the cylinder situated underneath from the top downward.

With respect to the prior art, reference is made to *US Patent 4,674,925*, which describes a gang drill and a method for clearing patterns of holes in tubular members. The device of this document comprises a number of drill bits, a frame construction and fastening supports for supporting the drill.

In operations of modification of cylinders in a drying group of a paper machine, the drying cylinder has previously been removed from its place and carried aside for machining. At present, it is known in prior art to convert ordinary non-perforated cylinders in a drying group to so-called **UnoVac** cylinders by making holes in the cylinder mantle. The applicant's *FI Patent 91 135* describes a method and an apparatus by means of which perforations can be made on site in a paper mill without detaching the cylinder. In this arrangement, a drilling machine moves on support of separate guides in the axial direction of a roll. During the machining process, the drilling unit is arranged to be supported both on the mantle face of the cylinder that is being machined and on the mantle face of an adjacent cylinder. The apparatus comprises a spindle box of a multi-spindle drilling machine incorporating a rotation unit for drill bits and associated power transmission means for transferring rotation simultaneously to all the drill bits situated side by side. The apparatus further comprises a cylinder by whose means a jig of the drill bits, i.e. a drill guide, is guided into contact with the face to be machined, whereby, while the apparatus is supported both on the cylinder that is being machined and on another, adjacent cylinder constituting a support base for the guides, a unified robust structure is formed for the time of the machining operation, thereby allowing undisturbed drilling. The apparatus comprises a spindle box that is displaceable with respect to the main frame and therein a separate motor for displacing the spindle box with its drills. The apparatus also comprises a motor for rotating the drill bits.

In the arrangement described in the applicant's *FI Patent 91 135,* the drill bits are situated in a fixed position with respect to one another. In that case, the spacing of the grooves in a roll must also be fixed, because it is preferable that the perforations are situated expressly in the bottom of the grooves. However, the spacing of grooves may vary from cylinder to cylinder. With respect to the prior art, reference may also be made to the applicant's *FI Patent 91 834,* which describes an arrangement for improving the method and the apparatus of the patent described above, where the spacing between adjacent drill bits of the drilling apparatus may be adjusted as desired.

A drawback in the prior-art apparatus has been that the mounting of the guides needed for fastening the drill guide has been time-consuming and, in some instances, there has not been enough space for fastening the guides to a cylinder adjacent to the cylinder to be drilled, if a machine construction with a narrow gap between the cylinders has been involved.

The prior-art arrangements have also had the drawback that, in some instances, it has not been possible to drill holes right at the edge of the cylinder by using a drill guide, but it has been necessary to drill by hand the holes to be made in the edge areas.

Further, one drawback in the prior-art applications may be that, when drilling from the side or from below, chips and the like could get into the drill guide causing problems and, moreover, their removal is problematic.

An object of the invention is to develop the previous method and apparatus described above such that it is simpler in its fastening arrangement in particular and, thus, quicker than the prior-art arrangement, and a further object of the invention is to propose an arrangement in which the operation of the device is not hampered by drilling chips, and which also allows the chips to be cleaned by a vacuum cleaner during drilling, and in which the edge areas of the cylinder may also be drilled.

With a view to achieving the above objectives as well as those that will come out later, the method in accordance with the invention is mainly characterized in that, in the method, the mantle of the cylinder is drilled while the cylinder is on its site of operation in the paper machine and the device is supported by means of the fastening supports on the cylinder to be machined and/or on the cylinders situated adjacent to and above the cylinder to be machined, the cylinder to be machined being situated in a staggered relationship with said cylinders, and that, in the method, the device is transferred on support of wheels attached to the fastening supports.

The device in accordance with the invention is, in turn, mainly characterized in that the device is supported, while drilling the cylinder on its site of operation in the paper machine, by fastening supports on the cylinder to be machined and/or on the cylinders situated above and adjacent to the cylinder to be machined, the cylinder to be machined being placed in a staggered relationship with said cylinders, and that the device comprises wheels attached to the fastening supports for transferring the device in the longitudinal direction of the cylinder from one drilling position to the next one.

As a result of the shortened fastening time, a saving of time of several hours for each cylinder to be drilled is achieved by means of the device of the invention, and in addition thereto, during drilling, it is possible to work on the adjacent cylinders, for example, to replace the ends or perform other servicing operations. In the arrangement in accordance with the invention, the drilling operation is performed downwards, with the result that drilling chips and the like do not cause any problems.

The device in accordance with the invention rests on cylinders situated on a higher level, i.e. in an upper row, with respect to the cylinder to be drilled and adjacent thereto or on the cylinder to be drilled and on the adjacent cylinders situated on a higher level without separate guides, whereby it is possible to also drill the edge areas of the cylinder, while the device is able to move substantially over the entire length of the cylinder. The device drills holes from above downward, and the drills are attached to the drill guide by means of a clamp bushing. During transfer of the device, the device rests on wheels provided at the ends of the fastening supports of the device, said wheels being preferably spring-loaded and supported on the above-mentioned adjacent cylinders situated on a higher level or on the cylinder to be drilled. The device is tightened and locked in place in a drilling position by means of an actuator, preferably a pneumatic cylinder.

The device can be fastened in cylinder gaps of varying widths because the fastening supports of the device can be extended because of their telescopic structure. When needed, separate fastening means can be fixed to special places in connection with the device. Moreover, when needed, the device can be fastened to the guides used today and described in the applicant's earlier patents.

The drill guide plate of the device comprises a guide pin or a wheel which guides the drilling device to a correct position with respect to a groove and, in addition, the drill guide plate is provided with lubrication ducts for lubricating the bits. Most favourably, each spindle box includes 15 drills, but the number of drills may be increased, if needed. The spacing between the drills is fixed or adjustable in the manner described in the applicant's above-mentioned patents. The drills are preferably attached to the guide plate by means of a clamp chuck.

The most important advantages of the method and the device in accordance with the invention are achieved as the quickness of mounting and as the quickness of the drilling process. The device is easy to mount, and it is suitable for various gaps between rolls.

In the following, the invention will be described in more detail with reference to the figures in the accompanying drawing, to the details of which the invention is, however, by no means intended to be narrowly confined.
Figure 1 schematically shows the device in accordance with an embodiment of the invention placed in a machining situation between cylinders.
Figure 2 is a schematic more detailed view of the device in accordance with an embodiment of the invention.
Figure 3 schematically shows the device provided with drills in accordance with an embodiment of the invention.
Figure 4 shows another advantageous embodiment of the invention in which the device 20 for drilling holes in a cylinder is formed into a drill carriage. The view is from the side of the drill carriage.
Figure 5 shows the device arrangement of Fig. 4 in the direction of the arrow K₁ in Fig. 4.
Figure 6 is a separate view of a mechanism associated with so-called transfer wheels for moving the transfer wheels.
Figure 7 shows a support rod associated with the drill carriage for supporting the drill carriage when the cylinder that is being drilled is rotated to a new drilling position.
Figure 8A illustrates the location of wheels 111a₁ and 111a₂, i.e. so-called support wheels, in a circumferential groove U₁ situated in the surface of the cylinder to be machined when a hole or holes R₁,R₂ is/are drilled such that the bores extend through the bottom of the groove U₁ and, thus, through the mantle face of the cylinder.
Figure 8B shows a section I―I from Fig. 8A.
Figure 9 illustrates the fastening of a belt passed around a cylinder to be drilled to a cylinder device that tightens the belt.

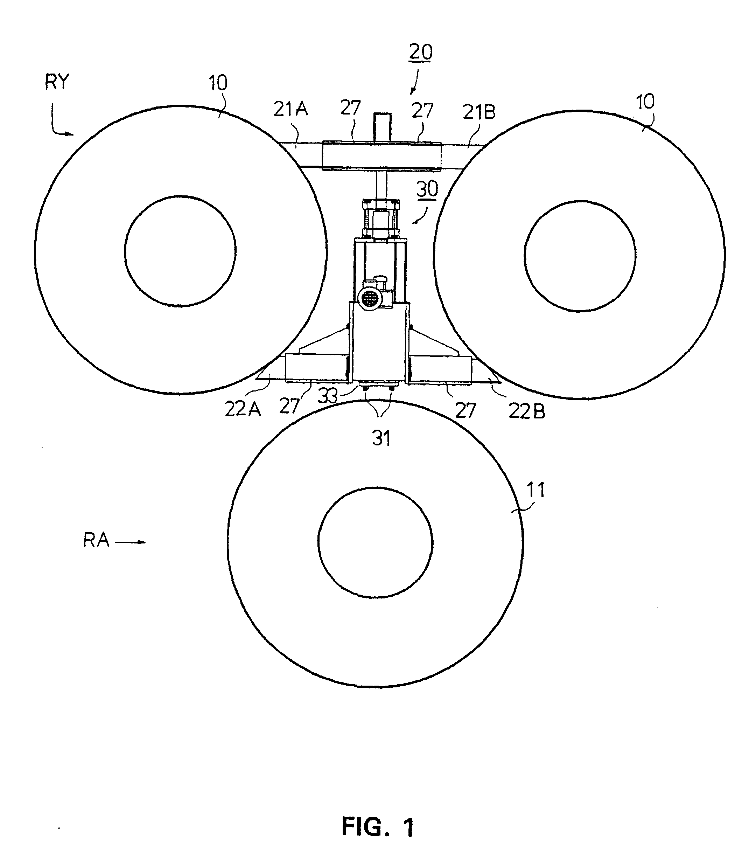

As shown in Fig. 1, a drill guide 20 is placed between adjacent cylinders 10 in an upper row RY and a cylinder 11 that is intended to be drilled is situated underneath at the gap between them , i.e. in a lower row RA in a staggered relationship. The drill guide 20 rests on support of the cylinders 10 of the upper row RY by means of fastening supports 21A,21B,22A and 22B. The fastening supports 21A,21B,22A,22B have a telescopic structure 27 and, thus, they can be fastened in cylinder gaps of various widths. The frame structure of the drill guide 20 with its means necessary for drilling is generally denoted with the reference numeral 30 and guide studs are denoted with the reference numeral 31. The fastening supports 21A―22B of the drill guide 20 are attached to both ends of the frame structure 30 in a vertical direction and they extend to the adjacent cylinders 10 in a horizontal direction.

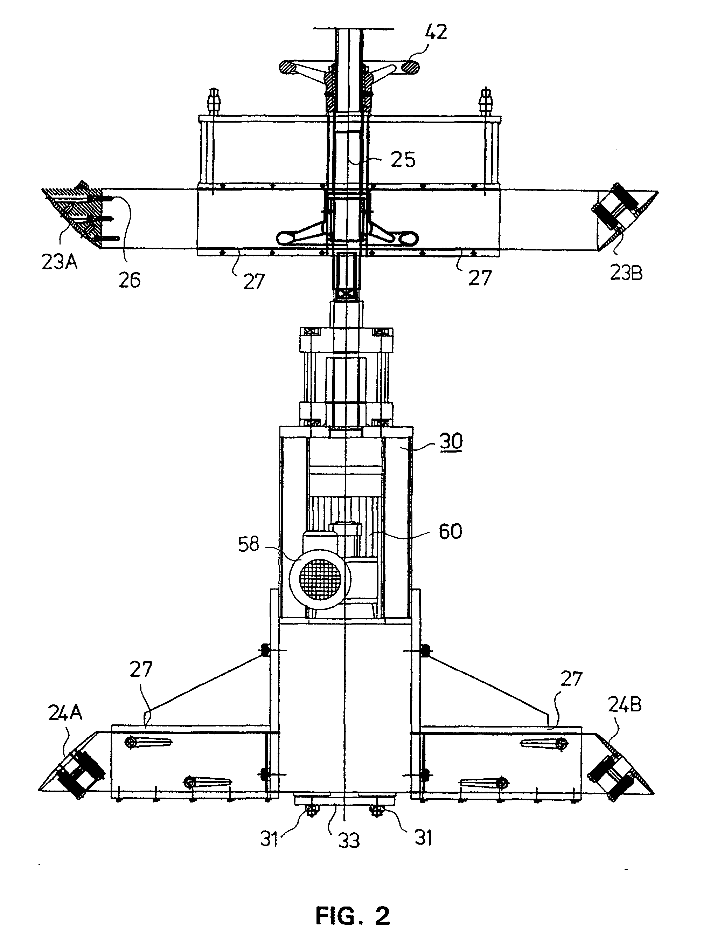

Fig. 2 shows the device 20 of the invention in more detail and, as it is clear therefrom, wheels 23A,23B,24A,24B are attached to the end of each fastening support 21A―22B, said wheels being spring-loaded. The springs of the wheels 23A―24B are denoted with the reference numeral 26. The device is transferred on support of the wheels 23A―24B to a drilling position, after which the device 20 is tightened and locked in place by means of an actuator, preferably a pneumatic cylinder 25.

By means of drill bits 32, a hole is drilled in the bottom of a groove in the mantle of the cylinder 11, and the lubricant for drilling is passed into the holes through a guide plate 33 of the guide 20. After the drilling device 20 has been transferred in place between the cylinders 10, it is positioned in a desired drilling position, tightened and locked in place. When the holes of one cycle have been drilled in the cylinder 11 situated underneath and to be perforated, the pneumatic cylinder 25 is opened and the device 20 is transferred in the longitudinal direction of the cylinders 10,11 to the next drilling position.

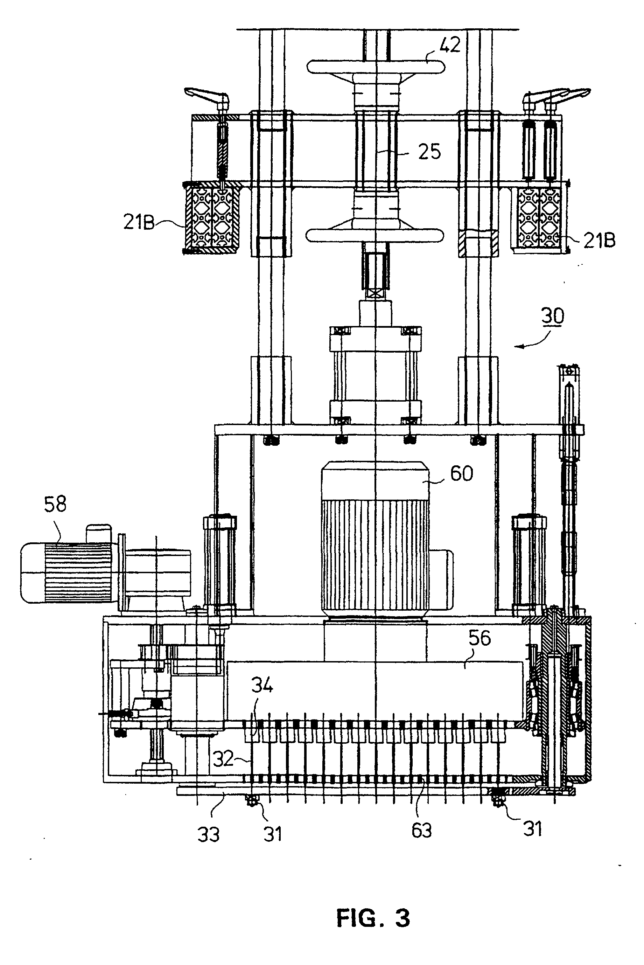

As shown in Fig. 3, the drill bits 32 are attached to the guide 20 by means of a clamp chuck 34, whereby replacement of the bits 32 is also quick. Preferably, long-hole drills are employed so as to provide good reach. The device can be adjusted manually in a height direction, for example, by means of a wheel 42 so as to be as close as possible to the cylinder 11 to be drilled in order to achieve the desired drilling quality. The guide plate 33 of the guide 20 is provided with lubricant ducts 63 for lubricating the drill bits 32.

The device 20 comprises a spindle box 56 to which a motor 58 of rotation of the drill bits 32 is attached. The motor 60 of rotation is arranged to rotate the drill bits 32 at the same time. The spindle box 56 further comprises a motor 58 attached thereto, by means of which motor the spindle box 56 and the drill bits 32 provided in it are moved in order to produce a feed movement for the drill bits 32 and, after drilling, to take them apart from the roll mantle that is being drilled. The drilling operations of the present device 20 and the arrangements associated therewith can be accomplished according to the principles described in the applicant's patents *91 135* and *91 834* or in another way per se familiar to a person skilled in the art.

As seen from Figs. 1-3, the device 20 includes several drills 32, for instance, 15 drills, but their number may be chosen as desired. In the embodiment example shown in Figs. 1-3, the spacing between the drill bits 32 is fixed. The arrangement may also be adjustable in accordance with the applicant's patent *91 834.*

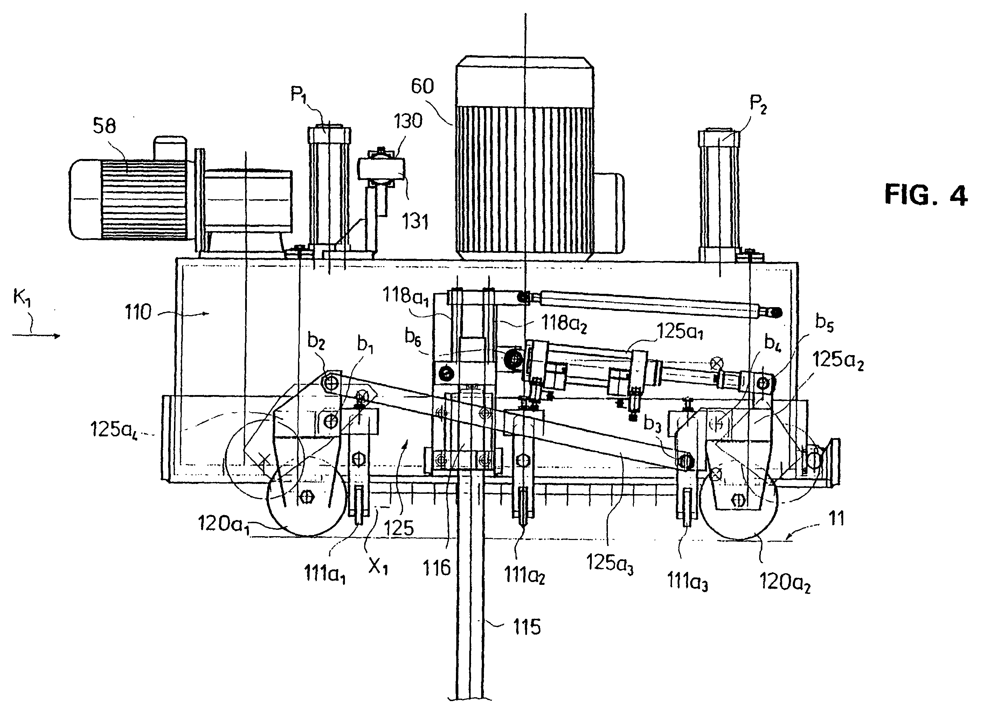

Fig. 4 shows another advantageous embodiment of the invention from the side. The device 20 is constituted by a drill carriage 110 including a set of wheels, which drill carriage comprises, as described in the preceding embodiment, drill bits 32 by means of which a number of holes R₁,R₂... are simultaneously drilled in circumferential grooves U₁,U₂... of the cylinder 11 through the cylinder mantle. The feed and rotation drive of the drill bits 32 is similar to that depicted in the preceding embodiment and in its figures.

When referring to a cylinder in connection with the embodiment, rolls to be perforated in their mantle may also be intended.

The drill carriage 110 comprises first wheels 111a₁,111a₂,111a₃,111a₄,111a₅, 111a₆... Said wheels are arranged to rotate in their bearings and connected to the drill carriage 110. The axes X₁ of rotation of the wheels 111a₁,111a₂... are arranged such that the axes X₁ of rotation are parallel to the axis X of rotation of the cylinder 11 to be machined. The wheels 111a₁,111a₂... are arranged to be positioned in grooves U₁,U_{2...} of the cylinder 11, in which grooves the perforations R₁,R₂... are made by the drill bits 32. The holes R₁,R₂... thus extend from the bottoms of the grooves U₁,U₂... through the cylinder mantle into the interior of the cylinder.

The apparatus further includes a belt 115 which can be tightened by means of an actuating cylinder 116, preferably a pneumatic cylinder, around the cylinder 11 to be machined. Preferably, there is at least one belt 115. When the bores are made into the cylinder 11 such that the bores R₁,R₂... extend to the circumferential grooves U₁,U₂... of the cylinder through the cylinder mantle, the belt 115 has been tightened around the cylinder 11 that is being machined. In that connection, the wheels 111a₁,111a₂ are placed so as to be supported on the edges of circumferential grooves U₁,U₂... of the cylinder 11 that is being machined. The drilling device machines then the bore holes into the cylinder mantle and, after the machining operation has taken place, the tension of the belt 115 is released and the cylinder 11 is rotated to the next drilling position, after which the belt 115 is tightened again and the drilling operation is accomplished in a new angle position.

After certain grooves U₁,U₂,U₃,U₄... of the cylinder 11 have been drilled over the entire circumferential length of the grooves U₁,U₂..., the drill carriage is transferred forward above the cylinder 11 on support of second wheels, so-called transfer wheels 120a₁, 120a₂; 120a₃, 120a₄. The wheels 120a₁, 120a₂ are coupled to a linkage mechanism 125. The linkage of the linkage mechanism is moved by means of an actuator 125a₁ of the linkage mechanism such that the wheels 120a₁,120a₂,120a₃ and 120a₄ associated with the linkage lift the carriage so that the wheels of the carriage in the grooves U₁,U₂ are detached from the surface of the groove, and the carriage can be transferred in a position above the cylinder 11 in the direction of the axis X of the cylinder 11 forward to the next drilling position.

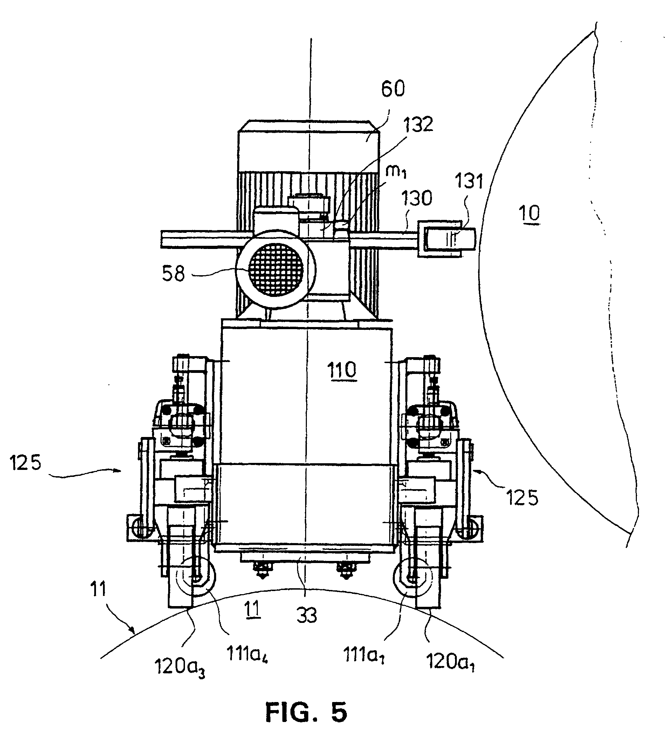

Fig. 5 shows the drill carriage 110 in the direction of the arrow K₁ in Fig. 4. The drill carriage 110 comprises the same kind of transfer mechanisms 125 for the wheels 120a₁,120a₂;120a₃ and 120a₄ on both sides of the drill carriage 110.

By employing the actuator of the mechanism associated with the wheels 120a₁, 120a₂, the wheels 120a₁,120a₂;120a₃,120a₄ can be lifted and lowered such that the carriage 110 can be lifted upwards from the upper face of the cylinder, in which connection the support wheels 111a₁,111a₂... are detached from the grooves U₁,U₂... The drilling device itself with its drill bits 32, being situated inside the frame of the carriage 110, comprises a number of drill bits 32 placed in one or more rows, whereby the drilling operation is carried out simultaneously in a number of different grooves U₁,U₂,U₃... The frame of the drill carriage 110 is open at the bottom. In the side view of the carriage shown in the figure, the drill guide 33 comprises actuating cylinders P₁,P₂, whereby the drill guide 33 can be moved into contact with or as close as possible to the face to be drilled in order to support the drill bits 32. The drill guide 33 may also be in a fixed position with respect to the drill carriage 110.

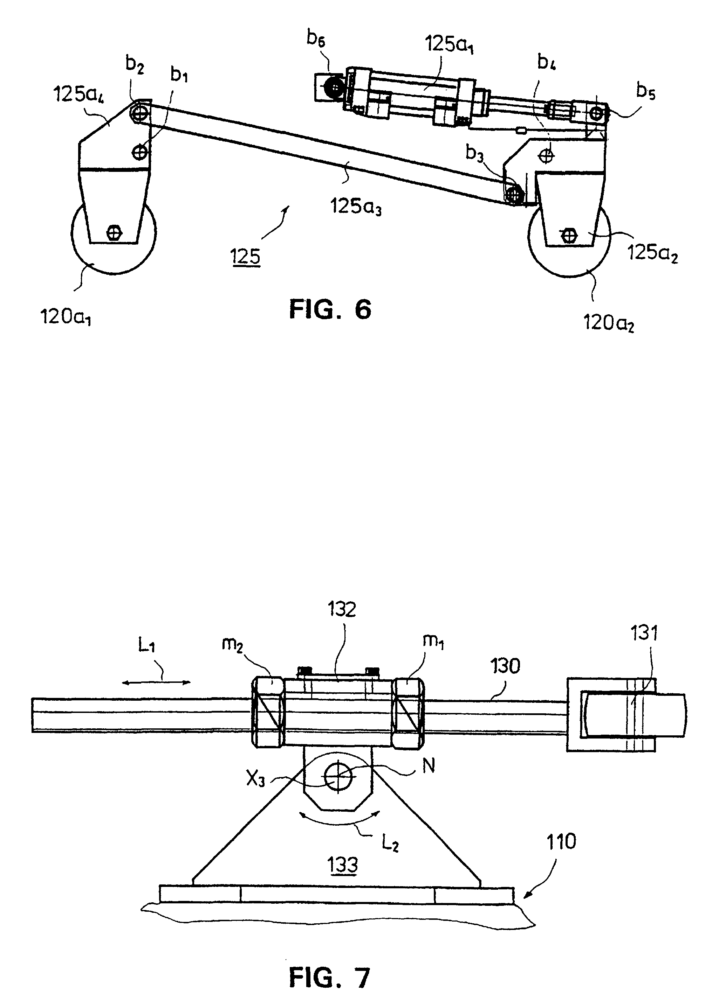

The drill carriage 110 can be transferred on the upper face of the cylinder 11 to the next drilling position. Before the above-mentioned steps, the belt 115 is loosened by releasing the pressure from the cylinder device 116, preferably a pneumatic cylinder. Fig. 6 is a separate view of the mechanism 125 associated with the transfer wheels 120a₁,120a₂.

The mechanism 125 shown in the figure comprises the cylinder device 125a₁ as an actuator coupled to a pivot arm 125a₂ which is linked pivotally with respect to the drill carriage 110. Further, an intermediate lever 125a₃ is coupled to the pivot arm 125a₂, which intermediate lever transmits the motion of the arm of the cylinder device 125a₁ further to a second pivot arm 125a₄. The wheel 120a₂ is connected to the pivot arm 125a₄ and the wheel 120a₂ is connected to the other pivot arm 125a₂. The pivot arm 125a₄ is linked by means of an articulated joint b₁ so as to be pivotal with respect to the frame of the carriage 110. Similarly, the pivot arm 125a₂ is linked to the frame of the carriage 110 by means of an articulated joint b₄. The intermediate lever 125a₃ is linked to the pivot arm 125a₄ by means of an articulated joint b₁ and to the pivot arm 125a₂ by means of an articulated joint b₃. A similar mechanism 125 is situated on the other side of the carriage 110, and said mechanisms 125 are operated simultaneously. The cylinder device 125a₁ is connected to the carriage 110 by means of an articulated joint b₆ and to the pivot arm 125a₂ by means of the articulated joint b₄ in the cylinder arm.

As shown in Fig. 7, the device 20 comprises a support rod 130 associated with the drill carriage 110 and an end roller 131 in said support rod, the end roller being able to come into contact with a cylinder 10 adjacent to the cylinder 11 that is being machined when the cylinder 11 is rotated in order to achieve a new angle position for the next drilling cycle. The support rod 130 can be positioned in a sleeve 132 of the carriage 110, and the support rod can be positioned linearly (arrow L₁) so as to be supported on an adjacent cylinder 10 on either side of the cylinder 11 depending on the direction of rotation in which the cylinder 11 is rotated to attain a new angle position for drilling. The support rod 130 comprises threads and locking nuts m₁ and m₂ by means of which the support rod 130 can be locked in a desired position. Further, the sleeve 132 can be turned in an articulated joint N about an axis X₃ with respect to a bracket 133 connected to the carriage 110.

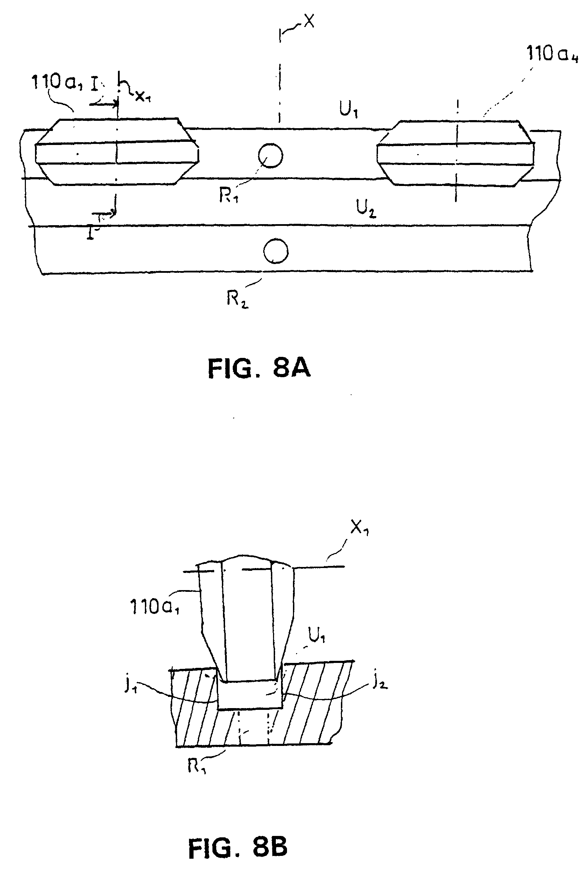

Fig. 8A illustrates the drilling operation in accordance with the invention. During drilling, the wheels 111a₁,111a₂... of the drill carriage 110 are placed in a groove U₁ of the cylinder 11. The drilling operation is performed by means of the drill bits 32 of the drill carriage 110 while the wheels 111a₁,111a₂... situated in the groove U₁ support the drilling operation and enable the cylinder 11 to be rotated to place the cylinder 11 that is being drilled in a new angle position.

Fig. 8B is a sectional view I―I of Fig. 8A. The wheels 111a₁,111a₂... are supported on edges j₁, j₂ of the grooves U₁,U₂...

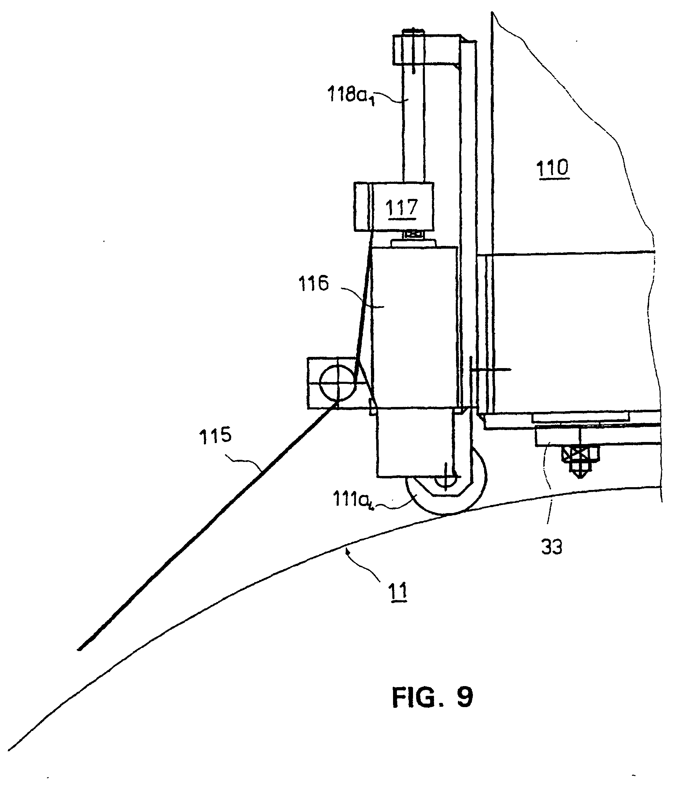

Fig. 9 shows the coupling of the belt 115 passed around the cylinder 11 to the cylinder device 116. The belt 115 is supported through an attachment part 117 on vertical auxiliary guides 118a₁,118a₂. The belt 115 itself is moved on support of the auxiliary guides 118a₁,118a₂. The auxiliary guides 118a₁,118a₂ prevent torques from being exerted on the rod of the cylinder device 116.

Thus, by means of the device arrangement of the invention described above, the drilling of cylinders can be performed such that the bore extends from the circumferential grooves of the cylinders through the cylinder mantle. The device in accordance with the invention, when situated in a position above the cylinder 11, enables the cylinder mantle to be perforated as so-called on-site drilling so that the cylinder need not be removed out of connection with a paper machine/board machine. The cylinder can be drilled on site in a paper mill. During drilling of the cylinder, the carriage 110 is supported on the upper surface of the cylinder 11 that is being drilled and, when the drilling position is changed by rotating the cylinder that is being drilled, the drill carriage is additionally supported on an adjacent cylinder 10 by means of the support arm 130. Thus, during drilling, the drill carriage 110 is placed on the upper face of the cylinder that is being drilled in such a way that the wheels 111a₁,111a₂... of the drill carriage 110, whose axis X₁ of rotation is parallel to the axis X of rotation of the cylinder that is being drilled, are situated in circumferential grooves U₁,U₂... of the cylinder/roll. During drilling, the drill carriage 110 is held in contact with the cylinder that is being drilled by tightening the belt 115 around the cylinder that is being drilled. The tightening of the belt 115 may take place by means of the cylinder device 116, preferably a pneumatic cylinder.

Above, the invention has been described only with reference to one of its advantageous embodiment examples, to the details of which the invention is, however, by no means intended to be narrowly confined. Numerous variations and modifications are possible.

## Claims

1. A method for drilling holes in a mantle of a cylinder of a paper machine, in which method the holes are drilled in the cylinder (11) mantle by means of a device (20) provided with drill bits (32), which device (20) is transferred after each drilling cycle to the next drilling position, in which method the device (20) for drilling holes is supported by means of fastening supports (21A-22B; 125,115) of the device (20), whereby in the method, before the drilling is started, the device (20) is locked in place by means of an actuator (25; 125a₁, 116) by locking the fastening supports (21A-22B; 125,115) in a desired position, and whereby, by means of drill bits (32) of the device (20), the holes are drilled in the cylinder (11) situated underneath from the top downward **characterized in that**, in the method, the mantle of the cylinder (11) is drilled while the cylinder is on its site of operation in the paper machine and the device (20) is supported by means of the fastening supports (21A-22B; 125,115) on the cylinder (11) to be machined and/or on the cylinders (10) situated adjacent to and above the cylinder (11) to be machined, the cylinder (11) to be machined being situated in a staggered relationship with said cylinders, and that, in the method, the device (20) is transferred on support of wheels (23A-24B; 120a₁, 120a₂...) attached to the fastening supports (21A-22B; 125).

2. A method as claimed in claim 1, **characterized in that**, after each drilling cycle, the device (20) for drilling holes is transferred to the next drilling position in the direction of the longitudinal axis of the cylinder (11) that is being machined.

3. A method as claimed in claim 1 or 2, **characterized in that**, during each drilling cycle, the cylinder (11) to be machined is rotated through a given angle for drilling a desired number of holes in the mantle of the cylinder (11).

4. A method as claimed in claim 1, **characterized in that** the device (20) is formed into a drill carriage (110) which comprises first wheels (111a₁,111a₂,111a₃...), which are supported on the edges of circumferential grooves (U₁,U₂...) of the cylinder when holes are made through the cylinder mantle by means of the drill bits (32), and that the device comprises second wheels (120a₁,120a₂...) which can be lifted and lowered with respect to the drill carriage (110) and by whose means the drill carriage (110) can be transferred in the axial direction of the cylinder (11) that is being machined on the cylinder (11) that is being drilled to a new drilling position.

5. A method as claimed in the preceding claim, **characterized in that** the device comprises movement mechanisms (125) connected to the second set of wheels (120a₁,120a₂;120a₃,120a₄), a set of so-called transfer wheels, each movement mechanism (125) comprising an actuator (125a₁) by means of which the wheels (120a₁,120a₂;120a₃,120a₄) are lifted and lowered, in which connection the wheels (112a₁,112a₂...) placed in the grooves (U₁,U₂...) can be lifted out of grooves (U₁,U₂...) of the cylinder (11) that is being drilled and back into grooves (U₁,U₂...), and that the wheels (111a₁,111₂...) are supported on the edges (j₁,j₂) of the grooves (U₁,U₂...).

6. A method as claimed in any one of the preceding claims 4 or 5, **characterized in that**, in the method, for the duration of drilling, the drill carriage (110) is fastened to the cylinder (11) that is being drilled by means of a belt (115) passed around the cylinder (11) that is being drilled.

7. A method as claimed in claim 6, **characterized in that** the belt (115) is tightened and loosened by means of an actuator (116), preferably a cylinder device.

8. A device for drilling holes in a mantle of a cylinder of a paper machine, which device (20) comprises a number of drill bits (32), a frame construction (30), and drive means (58,60) for transferring and rotating the drill bits (32) during drilling, which device (20) comprises fastening supports (21A-22B; 125,115) by whose means the device (20) can be supported in place in a drilling position, whereby the device (20) comprises an actuator (25; 125a₁, 116) for locking the device (20) in place in the drilling position, and the device (20) has drill bits (32) for drilling holes in the cylinder (11) situated underneath from the top downward, **characterized in that** the device (20) is supported, while drilling the cylinder on its site of operation in the paper machine, by the fastening supports (21A-22B; 125,115) on the cylinder to be machined and/or on the cylinders (10) situated above and adjacent to the cylinder (11) to be machined, the cylinder (11) to be machined being placed in a staggered relationship with said cylinders, and that the device comprises wheels (23A-24B; 120a₁,120a₂...) attached to the fastening supports (21A-22B; 125) for transferring the device (20) in the longitudinal direction of the cylinder (11) from one drilling position to the next one.

9. A device as claimed in claim 8, **characterized in that** the actuator (25, 116) is a pneumatic cylinder.

10. A device as claimed in claim 8 or 9, **characterized in that** the device (20) comprises four fastening supports (21A-22B) which are placed in pairs on both sides of the device (20) such that two fastening supports (21A,22A; 21B,22B) spaced from each other in a vertical direction are supported on both of the adjacent cylinders (10) situated above.

11. A device as claimed in any one of claims 8 to 10, **characterized in that** the wheels (23A-24B; 120a₁,120a₂...) are spring-loaded.

12. A device as claimed in any one of claims 8 to 11, **characterized in that** the fastening supports (21A-22B) of the device (20) are telescopic.

13. A device as claimed in claim 8, **characterized in that** the device (20) for drilling holes (R₁,R₂...) through the mantle of the cylinder (11) is formed into a drill carriage (110) which comprises first wheels (111a₁,111a₂...) which are placed, during drilling, in circumferential grooves (U₁,U₂...) of the cylinder that is being drilled, and that there are second wheels (120a₁,120a₂...) which can be lifted and lowered.

14. A device as claimed in claim 13, **characterized in that** the drill carriage (110) can be lifted and lowered by means of a mechanism (125) which is operated by an actuator (125a₁) such that the wheels (11 1a₁,111a₂) provided in it can be lifted out of the grooves (U₁, U₂...) situated in the surface of the cylinder (11) or into said grooves (U₁,U₂...), and that the wheels (111a₁,111a₂...) are supported on the edges (j₁,j₂) of the grooves (U₁, U2...).

15. A device as claimed in claim 13 or 14, **characterized in that** the drill carriage is provided with a belt (115) or equivalent which can be tightened by means of an actuator (116), in which connection, by tightening the belt around the cylinder (11) to be machined, the drill carriage (110) is fastened to the upper face of the cylinder that is being machined for the duration of drilling.

16. A device as claimed in claim 13, 14 or 15, **characterized in that** the drill carriage (110) is provided with a support arm (130) comprising at its end a roller (131) or equivalent, whereby the support arm can be supported on a cylinder (10) adjacent to the cylinder (11) that is being drilled when the cylinder (11) that is being drilled is rotated to a new angle position of drilling, at which stage the belt (115) passed around the cylinder that is being drilled is released so that is does not press the drill carriage (110) against the upper face of the cylinder (11) that is being machined.

## Patentansprüche

1. Verfahren zum Einbringen von Bohrungen in einen Mantel eines Zylinders einer Papiermaschine, wobei in dem Verfahren die Bohrungen in den Mantel des Zylinders (11) mittels einer Vorrichtung (20), welche mit Bohrköpfen (32) versehen ist, gebohrt werden, wobei die Vorrichtung (20) nach jedem Bohrzyklus zu der nächsten Bohrposition bewegt wird, wobei in dem Verfahren die Vorrichtung (20) zum Bohren der Bohrungen mittels Befestigungsträgern (21A-22B;125,115) der Vorrichtung (20) gehalten wird, wobei in dem Verfahren, bevor mit dem Bohren begonnen wird, die Vorrichtung (20) mittels eines Aktuators (25;125a₁,116) durch das Verriegeln der Befestigungsträger (21A-22B;125,115) in einer gewünschten Position an einer Stelle verriegelt wird, und wobei mittels Bohrköpfen (32) der Vorrichtung (20) die Bohrungen in den darunter liegenden Zylinder (11) von oben nach unten eingebracht werden,
**dadurch gekennzeichnet, dass**
bei dem Verfahren der Mantel des Zylinders (11) gebohrt wird, während der Zylinder sich an der Stelle seines Betriebs in der Papiermaschine befindet und die Vorrichtung (20) mittels der Befestigungsträger (21A-22B;125,115) auf dem zu bearbeitenden Zylinder (11) und/oder auf den Zylindern (10), die benachbart zu und oberhalb des zu bearbeitenden Zylinders (11) angeordnet sind, gehalten wird, wobei der zu bearbeitende Zylinder (11) versetzt zu jenen Zylindern angeordnet ist, und dass bei dem Verfahren die Vorrichtung (20) auf Rädern (23A-24B;120a₁,120a₂...), welche an den Befestigungsträgern (21A-22B; 125) angebracht sind, bewegt wird.

2. Verfahren nach Anspruch 1,
**dadurch gekennzeichnet, dass**
nach jedem Bohrzyklus die Vorrichtung (20) zum Einbringen der Bohrungen in der Richtung der Längsachse des Zylinders (11), der bearbeitet wird, bewegt wird.

3. Verfahren nach Anspruch 1 oder 2,
**dadurch gekennzeichnet, dass**
während jedes Bohrzykluses der zu bearbeitende Zylinder (11) zum Einbringen einer gewünschten Anzahl von Bohrungen in den Mantel des Zylinders (11) um einen vorgegebenen Winkel rotiert wird.

4. Verfahren nach Anspruch 1,
**dadurch gekennzeichnet, dass**
die Vorrichtung (20) in einem Bohrwagen (110) ausgebildet ist, welcher erste Räder (111a₁,111a₂, 111a₃...) aufweist, welche an den Rändern Ringnuten (U₁,U₂...) des Zylinders geführt werden, wenn mittels der Bohrköpfe (32) Bohrungen durch den Zylindermantel eingebracht werden, und dass die Vorrichtung zweite Räder (120a₁,120a₂...) aufweist, welche im Bezug zu dem Bohrwagen (110) angehoben und abgesenkt werden können und mittels welcher der Bohrwagen (110) in der axialen Richtung des Zylinders (11), welcher bearbeitet wird, auf dem Zylinder (11), der gebohrt wird, zu einer neuen Bohrposition bewegt werden kann.

5. Verfahren nach dem vorhergehenden Anspruch,
**dadurch gekennzeichnet, dass**
die Vorrichtung Bewegungsmechanismen (125), welche mit dem zweiten Satz von Rädern (120a₁,120a₂; 120a₃,120a₄) verbunden sind, und einen Satz sogenannter Transferräder aufweist, wobei jeder Bewegungsmechanismus (125) einen Aktuator (125a₁) aufweist, mittels welchem die Räder (120a₁,120a₂; 120a₃,120a₄) angehoben und abgesenkt werden, wobei in diesem Zusammenhang die Räder (112a₁,112a₂...), die in den Nuten (U₁,U₂...) angeordnet sind, aus den Nuten (U₁,U₂...) des Zylinders (11), der gebohrt wird, herausgehoben werden können und zurück in die Nuten (U₁,U₂...), und dass die Räder (111a₁, 111a₂...) auf den Rändern (j₁,j₂) der Nuten (U₁, U₂...) geführt werden.

6. Verfahren nach einem der vorhergehenden Ansprüche 4 oder 5,
**dadurch gekennzeichnet, dass**
bei dem Verfahren für die Dauer des Bohrens der Bohrwagen (110) an dem Zylinder (11), der gebohrt wird, mittels eines Gurtes (115) befestigt wird, der um den Zylinder (11), der gebohrt wird, herumgeführt wird.

7. Verfahren nach Anspruch 6,
**dadurch gekennzeichnet, dass**
der Gurt (115) mittels eines Aktuators (116), vorzugsweise einer Zylindereinrichtung, gespannt und gelockert wird.

8. Vorrichtung zum Einbringen von Bohrungen in einen Mantel eines Zylinders einer Papiermaschine, wobei die Vorrichtung (20) eine Anzahl von Bohrköpfen (32), eine Rahmenkonstruktion (30) und Antriebseinrichtungen (58,60) zum Bewegen und Rotieren der Bohrköpfe (32) während des Bohrens aufweist, wobei die Vorrichtung (20) Befestigungsträger (21A-22B; 125,115) aufweist, mittels welcher die Vorrichtung (20) an einer Stelle in einer Bohrposition gehalten werden kann, wobei die Vorrichtung (20) einen Aktuator (25;125a₁,116) zum Verriegeln der Vorrichtung (20) an einer Stelle in der Bohrposition aufweist, und wobei die Vorrichtung (20) Bohrköpfe (32) zum Einbringen von Bohrungen in den darunter liegenden Zylinder von oben nach unten aufweist,
**dadurch gekennzeichnet, dass**
die Vorrichtung mittels der Befestigungsträger (21A-22B;125,115) während des Bohrens des Zylinders an der Stelle seines Betriebs in der Papiermaschine auf dem zu bearbeitenden Zylinder und/oder auf den Zylindern (10), die oberhalb und benachbart zu dem zu bearbeitenden Zylinder (11) angeordnet sind, gehalten wird, wobei der zu bearbeitende Zylinder (11) versetzt zu jenen Zylindern angeordnet ist, und dass die Vorrichtung Räder (23A-24B;120a₁,120a₂...), welche an den Befestigungsträgern (21A-22B;125) angebracht sind, zum Bewegen der Vorrichtung (20) in der Längsrichtung des Zylinders (11) von einer Bohrposition zu der nächsten aufweist.

9. Vorrichtung nach Anspruch 8,
**dadurch gekennzeichnet, dass**
der Aktuator (25,116) als pneumatischer Zylinder ausgebildet ist.

10. Vorrichtung nach Anspruch 8 oder 9,
**dadurch gekennzeichnet, dass**
die Vorrichtung (20) vier Befestigungsträger (21A-22B) aufweist, welche in Paaren auf beiden Seiten der Vorrichtung (20) angeordnet sind, so dass die zwei Befestigungsträger (21A,22A;21B,22B), welche in einer vertikalen Richtung voneinander beabstandet sind, auf beiden der oben angeordneten, benachbarten Zylinder (10) gehalten sind.

11. Vorrichtung nach einem der Ansprüche 8 bis 10,
**dadurch gekennzeichnet, dass**
die Räder (23A-24B;120a₁,120a₂...) federbelastet sind.

12. Vorrichtung nach einem der Ansprüche 8 bis 11,
**dadurch gekennzeichnet, dass**
die Befestigungsträger (21A-22B) der Vorrichtung (20) teleskopartig ausgebildet sind.

13. Vorrichtung nach Anspruch 8,
**dadurch gekennzeichnet, dass**
die Vorrichtung (20) zum Bohren der Bohrungen (R₁, R₂...) durch den Mantel des Zylinders (11) in einem Bohrwagen (110) ausgebildet ist, welcher erste Räder (111a₁,111a₂...) aufweist, die während des Bohrens in Ringnuten (U₁,U₂...) des Zylinders angeordnet sind, welcher gebohrt wird, und dass zweite Räder (120a₁,120a₂...) vorgesehen sind, welche angehoben und abgesenkt werden können.

14. Vorrichtung nach Anspruch 13,
**dadurch gekennzeichnet, dass**
der Bohrwagen (110) mittels eines Mechanismus (125), welcher durch einen Aktuator (125a₁) betrieben wird, derart angehoben und abgesenkt werden kann, dass die in ihm vorgesehenen Räder (111a₁,111a₂) aus den Nuten (U₁,U₂...), die in der Oberfläche des Zylinders (11) vorgesehen sind, herausgehoben oder in die Nuten (U₁,U₂...) hinein abgesenkt werden können, und dass die Räder (111a₁,111a₂...) auf den Rändern (j₁,j₂) der Nuten (U₁,U₂...) geführt sind.

15. Vorrichtung nach Anspruch 13 oder 14,
**dadurch gekennzeichnet, dass**
der Bohrwagen mit einem Gurt (115) oder ähnlichem versehen ist, welcher mittels eines Aktuators (116) gespannt werden kann, wobei in diesem Zusammenhang durch das Straffen des Gurtes um den zu bearbeitenden Zylinder (11) der Bohrwagen (110) für die Dauer des Bohrens an der oberen Fläche des Zylinders, der bearbeitet wird, befestigt wird.

16. Vorrichtung nach einem der Ansprüche 13, 14 oder 15,
**dadurch gekennzeichnet, dass**
der Bohrwagen (110) mit einem Tragarm (130) versehen ist, der an seinem Ende eine Rolle (131) oder ähnliches aufweist, wobei der Tragarm auf einem Zylinder (10) abgestützt werden kann, der benachbart zu dem Zylinder (11), der gebohrt wird, angeordnet ist, wenn der Zylinder (11), der gebohrt wird, zu einer neuen Winkelposition des Bohrens rotiert wird, wobei in diesem Zustand der um den Zylinder, der gebohrt wird, geführte Gurt (115) gelöst wird, so dass er den Bohrwagen (110) nicht gegen die obere Fläche des Zylinders (11), der bearbeitet wird, drückt.

## Revendications

1. Procédé pour le perçage de trous dans une chemise de cylindre d'une machine de fabrication de papier, procédé dans lequel les trous sont percés dans la chemise de cylindre (11) au moyen d'un dispositif (20) muni de forets de perçage (32), lequel dispositif (20) est transféré après chaque cycle de perçage sur la position de perçage suivante, procédé dans lequel le dispositif (20) pour le perçage de trous est monté sur des supports de fixation (21A-22B ; 125, 115) du dispositif (20), de sorte que dans le procédé, avant de commencer le perçage, le dispositif (20) est verrouillé en place au moyen d'un organe d'actionnement (25 ; 125a₁, 116) en bloquant les supports de fixation (21A-22B ; 125, 115) dans une position souhaitée, et de sorte qu'au moyen de forets (32) du dispositif (20), les trous sont percés dans le cylindre (11) situé au-dessous à partir du sommet vers le bas, **caractérisé en ce que**, dans le procédé, la chemise du cylindre (11) est percée, tandis que le cylindre se situe sur son site de fonctionnement dans la machine à papier et le dispositif (20) est monté sur des supports de fixation (21A-22B ; 125, 115) sur le cylindre (11) à usiner et/ou sur le cylindre (10) situé de façon contiguë à ou au-dessus du cylindre (11) à usiner, le cylindre (11) à usiner étant situé en relation en quinconce par rapport audit cylindre, et **en ce que**, dans le procédé, le dispositif (20) est transféré sur des supports de roues (23A-24B ; 120a₁, 120a₂...) fixés sur les supports de fixation (21A-22B ; 125) .

2. Procédé selon la revendication 1, **caractérisé en ce qu'**après chaque cycle de perçage, le dispositif (20) pour les trous de perçage est transféré sur la position de perçage suivante dans la direction de l'axe géométrique longitudinal du cylindre (11) qui est en cours d'usinage.

3. Procédé selon la revendication 1 ou 2,
**caractérisé en ce que**, pendant chaque cycle de perçage, le cylindre (11) à usiner est mis en rotation selon un angle donné pour le perçage d'un nombre souhaité de trous dans la chemise du cylindre (11).

4. Procédé selon la revendication 1, **caractérisé en ce que** le dispositif (20) est formé dans un chariot de perçage (110) qui comprend des premières roues (111a₁, 111a₂, 111a₃...) qui sont montées sur les bords de gorges circonférentielles (U₁, U₂...) du cylindre lorsque les trous sont réalisés à travers la chemise de cylindre au moyen de forets (32), et **en ce que** le dispositif comprend des secondes roues (120a₁, 120a₂...) qui peuvent être levées et abaissées par rapport au chariot de perçage (110) et au moyen desquelles le chariot de perçage (110) peut être transféré dans la direction axiale du cylindre (11) qui est en cours d'usinage sur le cylindre (11) et qui est percé sur une nouvelle position de perçage.

5. Procédé selon la revendication précédente, **caractérisé en ce que** le dispositif comprend des mécanismes de mouvement (125) raccordés à la seconde série de roues (120a₁, 120a₂ ; 120a₃, 120a₄), une série de roues dites roues de transfert, chaque mécanisme de mouvement (125) comprenant un organe d'actionnement (125a₁) au moyen duquel les roues (120a₁, 120a₂ ; 120a₃, 120a₄) sont soulevées et abaissées, auquel cas les roues (112a₁, 112a₂...) placées dans les gorges (U₁, U₂...) peuvent être soulevées hors des gorges (U₁, U₂...) du cylindre (11) qui est en cours de perçage et remises dans les gorges (U₁, U₂...), et que les roues (111a₁, 111a₂...) sont supportées sur les bords (j₁, j₂) des gorges (U₁, U₂...).

6. Procédé selon l'une quelconque des revendications précédentes 4 ou 5, **caractérisé en ce que**, dans le procédé, pendant toute la durée du perçage, le chariot de perçage (110) est fixé sur le cylindre (11) qui est en cours de perçage au moyen d'une courroie (111) passée autour du cylindre (11) qui est en cours de perçage.

7. Procédé selon la revendication 6, **caractérisé en ce que** la courroie (115) est serrée et desserrée au moyen d'un organe d'actionnement (116), de préférence un dispositif de cylindre.

8. Dispositif pour le perçage de trous dans une chemise d'un cylindre d'une machine à papier, lequel dispositif (20) comprend un certain nombre de forets (32), une structure de châssis (30) et des moyens d'entraînement (58, 60) pour transférer et mettre en rotation les forets (32) pendant le perçage, lequel dispositif (20) comprend des supports de fixation (21A-22B ; 125, 115) au moyen desquels le dispositif (20) peut être supporté en place dans une position de perçage, le dispositif (20) comprend un organe d'actionnement (25 ; 125a₁, 116) pour verrouiller le dispositif (20) en place dans la position de perçage, et le dispositif (20) comporte des forets (32) pour percer des trous dans le cylindre (11) situé au-dessous en partant du haut vers le bas, **caractérisé en ce que** le dispositif (20) est supporté, pendant le perçage du cylindre, sur son site de fonctionnement dans la machine à papier par les supports de fixation (21A-22B ; 125, 115) sur le cylindre à usiner et/ou sur les cylindres (10) situés au-dessus et de façon contiguë au cylindre (11) à usiner, le cylindre (11) à usiner étant placé en relation en quinconce par rapport audit cylindre, et **en ce que** le dispositif comprend des roues (23A-24B ; 120a₁, 120a₂...) fixées sur les supports de fixation (21A-22B ; 125) pour transférer le dispositif (20) dans la direction longitudinale du cylindre (11) à partir d'une position de perçage vers la suivante.

9. Dispositif selon la revendication 8, **caractérisé en ce que** l'organe d'actionnement (25, 116) est un cylindre pneumatique.

10. Dispositif selon la revendication 8 ou 9, **caractérisé en ce que** le dispositif (20) comprend quatre supports de fixation (21A-22B) qui sont placés par paires des deux côtés du dispositif (20), de telle sorte que deux supports de fixation (21A, 22A ; 21B, 22B) espacés l'un de l'autre dans une direction verticale sont montés sur les deux cylindres contigus (10) situés au-dessus.

11. Dispositif selon l'une quelconque des revendications 8 à 10, **caractérisé en ce que** les roues (23A-24B ; 120a₁, 120a₂...) sont montées sur ressort.

12. Dispositif selon l'une quelconque des revendications 8 à 11, **caractérisé en ce que** les supports de fixation (21A-22B) du dispositif (20) sont télescopiques.

13. Dispositif selon la revendication 8, **caractérisé en ce que** le dispositif (20) pour le perçage des trous (R₁, R₂...) à travers la chemise du cylindre (11) est formé dans un chariot de perçage (110) qui comprend des premières roues (111a₁, 111a₂...) qui sont placées pendant le perçage dans des gorges circonférentielles (U₁, U₂...) du cylindre qui est percé, et **en ce que** sont prévues des secondes roues (120a₁, 120a₂...) qui peuvent être soulevées et abaissées.

14. Dispositif selon la revendication 13, **caractérisé en ce que** le chariot de perçage (110) peut être soulevé et abaissé au moyen d'un mécanisme (125) qui est actionné par un organe d'actionnement (125a₁), de telle sorte que les roues (111a₁, 111a₂) prévues dans celui-ci peuvent être soulevées hors des gorges (U₁, U₂...) situées sur la surface du cylindre (11) ou être placées dans ces gorges (U₁, U₂...), et **en ce que** les roues (111a₁, 111a₂...) sont supportées sur les bords (j₁, j₂) des gorges (U₁, U₂...).

15. Dispositif selon la revendication 13 ou 14, **caractérisé en ce que** le chariot de perçage est équipé d'une courroie (115) ou élément équivalent qui peut être serré au moyen d'un organe d'actionnement (116), auquel cas, en serrant la courroie autour du cylindre (11) à usiner, le chariot de perçage (110) est fixé sur la face supérieure du cylindre qui est en cours d'usinage pour la durée du perçage.

16. Dispositif selon la revendication 13, 14 ou 15, **caractérisé en ce que** le chariot de perçage (110) est doté d'un bras de support (130) comprenant sur son extrémité un rouleau (131) ou élément équivalent, de sorte que le bras support peut être supporté sur un cylindre (10) contigu au cylindre (11) qui est en cours de perçage lorsque le cylindre (11) qui est en cours de perçage est mis en rotation selon une nouvelle position d'angle de perçage, étape au cours de laquelle la courroie (115) passée autour du cylindre qui est en cours de perçage est libérée, de telle sorte qu'elle ne pousse plus le chariot de perçage (110) contre la face supérieure du cylindre (11) qui est en cours d'usinage.
